# EUROPEAN PATENT SPECIFICATION

(11) **EP 4 579 884 B1**
(45) Date of publication and mention of the grant of the patent: **24.06.2026**
(21) Application number: 24193314.2
(22) Date of filing: 07.08.2024
(51) Int. Cl.: H01M 10/6557, H01M 10/6568, H01M 10/625

(54) **BATTERY PACK AND POWERED DEVICE**
BATTERIEPACK UND ANGETRIEBENE VORRICHTUNG
BLOC-BATTERIE ET DISPOSITIF ALIMENTÉ

(30) Priority: 28.12.2023 CN 202323630311 U
(43) Date of publication of application: 02.07.2025
(73) Proprietor: Eve Energy Co., Ltd., Huizhou, Guangdong 516006 (CN)
(72) Inventor: Huang, Weicai, Guangdong, 516006 (CN)
(74) Representative: Grünecker Patent- und Rechtsanwälte PartG mbB

(56) References cited:
- CN-A- 115 149 155
- CN-U- 209 747 686
- CN-U- 216 928 710
- JP-A- 2017 027 962

## Description

### TECHNICAL FIELD

The present invention relates to the technical field of batteries, in particular, a battery pack and a powered device.

### BACKGROUND

As the main energy form of new energy vehicles, the performance of a battery pack directly affects the overall performance of a new energy vehicle. Currently, battery packs on the market generally use liquid cooling systems for heat dissipation. For a liquid cooling system with multiple liquid cooling plates, nylon pipes are usually used to connect these liquid cooling plates, and then pipes with quick connectors are used to connect the liquid cooling plates and water nozzles on the box to guide the coolant from the liquid cooling plates to the outside of the battery pack.

This design is prone to the following problems: There are a large number of pipes and quick connectors. A car is used in a vibration environment for a long time, and quick connectors or pipes are prone to loosening and poor contact, or a sealing ring inside the car fails, resulting in leakage. The leaked coolant may flow everywhere inside the battery pack, which may cause a short circuit in the battery pack, and even fire, or other unpredictable dangers.

Therefore, it is urgent to provide a battery pack and a powered device to resolve the preceding problems.

JP 2017 027962 A discloses a battery system that accommodates multiple battery cells in the casing and uses the cooling plate for forced cooling.

### SUMMARY

One purpose of the present invention is to provide a battery pack. With this battery pack, the problem of internal leakage of the battery pack is effectively solved, a short circuit is not likely to occur, and the safety is relatively high.

Another purpose of the present invention is to provide a powered device. With the configuration of the preceding battery pack, high safety performance is provided.

The present invention is set out in the appended sets of claims.

### BRIEF DESCRIPTION OF DRAWINGS

To illustrate the embodiments of the present invention or the technical solutions in the related art more clearly and easily, the drawings used in the description of the embodiments or of the related art will be briefly described below. The drawings described below are merely part of the embodiments of the present invention, and those of ordinary skill in the art may acquire other drawings based on the drawings described below on the premise that no creative work is done.
FIG. 1 is a view illustrating the front structure of a battery pack according to an embodiment of the present invention.
FIG. 2 is a view illustrating the structure of a battery module according to an embodiment of the present invention.
FIG. 3 is a sectional view of a liquid cooling plate according to an embodiment of the present invention.
FIG. 4 is a view one illustrating the back structure of a battery pack according to an embodiment of the present invention.
FIG. 5 is a view illustrating the structure of a box according to an embodiment of the present invention.
FIG. 6 is a view two illustrating the back structure of a battery pack according to an embodiment of the present invention.
FIG. 7 is a partial sectional view of a battery pack according to an embodiment of the present invention.

### Reference list

- 10: box
- 11: bottom guard plate
- 12: beam
- 13: bracket
- 14: support plate
- 15: first structural adhesive
- 16: second structural adhesive
- 17: foam
- 20: battery module
- 21: cell
- 22: liquid cooling plate
- 221: body
- 222: collector
- 223: liquid inlet nozzle
- 224: liquid outlet nozzle
- 225: flow channel
- 30: liquid inlet pipe
- 31: first quick connector
- 40: liquid outlet pipe
- 41: second quick connector
- 50: protective cover

### DETAILED DESCRIPTION

The present invention is further described below in detail in conjunction with drawings and embodiments. It is to be understood that the embodiments set forth below are intended to merely illustrate and not to limit the present invention. It should also be noted that for ease of description, only a part related to the present unity model rather than the entire structure is illustrated in the drawings.

In the description of the present invention, terms "connected to each other", "connected", or "secured" are to be construed in a broad sense unless otherwise expressly specified and limited, for example, as securely connected, detachably connected, or integrated; mechanically connected or electrically connected; directly connected to each other or indirectly connected to each other via an intermediary; or internally connected between two elements or interaction relations between two elements. For those of ordinary skill in the art, specific meanings of the preceding terms in the present invention may be understood based on specific situations.

In the present invention, unless otherwise expressly specified and limited, when a first feature is described as "on" or "below" a second feature, the first feature and the second feature may be in direct contact or be in contact via another feature between the two features instead of being in direct contact. Moreover, when the first feature is "on", "above", or "over" the second feature, the first feature is right on, above, or over the second feature, or the first feature is obliquely on, above, or over the second feature, or the first feature is simply at a higher level than the second feature. When the first feature is "under", "below", or "underneath" the second feature, the first feature is right under, below, or underneath the second feature, or the first feature is obliquely under, below, or underneath the second feature, or the first feature is simply at a lower level than the second feature.

In the description of the embodiments, it is to be noted that orientations or position relations indicated by terms such as "above", "below", "left" and "right" are based on the drawings. These orientations or position relations are intended only to facilitate the description and simplify an operation and not to indicate or imply that a device or element referred to reruired have such particular orientations or must be configured or operated in such particular orientations. Thus, these orientations or position relations are not to be construed as limiting the present invention. In addition, terms "first" and "second" are used only to distinguish between descriptions and have no special meaning.

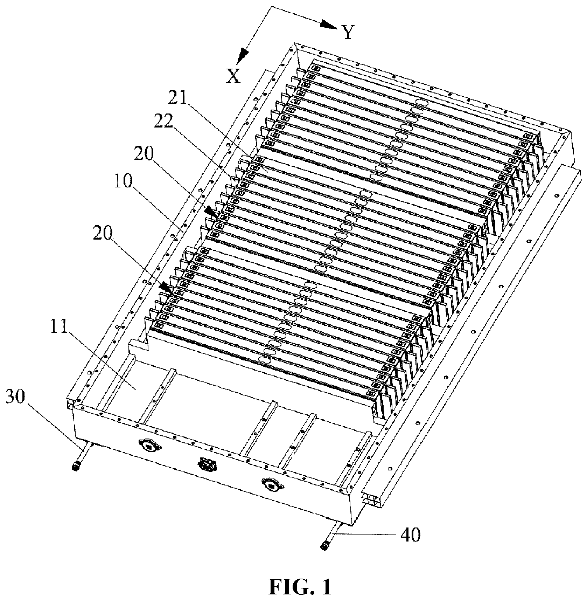

As shown in FIG. 1 to FIG. 4, the embodiment provides a battery pack including a box 10, a battery module 20, a liquid inlet pipe 30, and a liquid outlet pipe 40; a bottom guard plate 11 is disposed at the bottom of the box 10; the battery module 20 is disposed in the box 10; the battery module 20 includes a cell 21 and a liquid cooling plate 22 attached to the cell 21; the liquid cooling plate 22 is provided with a liquid inlet nozzle 223 and a liquid outlet nozzle 224 penetrating through the bottom guard plate 11 to the outside of the box 10; the bottom guard plate 11 is provided with a through hole for the liquid inlet nozzle 223 and the liquid outlet nozzle 224 to pass through; the liquid inlet pipe 30 and the liquid outlet pipe 40 are disposed outside the box 10, the liquid inlet pipe 30 is connected to the output end of a cooling device, and the liquid outlet pipe 40 is connected to the input end of the cooling device. The liquid inlet pipe 30 is provided with a first quick connector 31, the liquid outlet pipe 40 is provided with a second quick connector 41, the first quick connector 31 is connected to the liquid inlet nozzle 223, and the second quick connector 41 is connected to the liquid outlet nozzle 224. The liquid inlet pipe 30, the first quick connector 31, the liquid inlet nozzle 223, the liquid cooling plate 22, the liquid outlet nozzle 224, the second quick connector 41, and the liquid outlet pipe 40 are connected in sequence.

During operation, coolant in the cooling device flows into the liquid cooling plate 22 through the liquid inlet pipe 30, the first quick connector 31, and the liquid inlet nozzle 223, dissipates heat from the cell 21 by heat exchange, and discharges heat as the coolant flows. The discharged coolant flows into the liquid outlet pipe 40 through the liquid outlet nozzle 224 and the second quick connector 41 and finally flows back to the cooling device. Thus, a liquid cooling circuit is formed to reduce the temperature of the cell 21. The cooling effect is good.

In the battery pack, the liquid inlet nozzle 223, the first quick connector 31, the liquid inlet pipe 30, the liquid outlet nozzle 224, the second quick connector 41, and the liquid outlet pipe 40 are all located at the bottom of the box 10. Thus, a design without a pipe connection and a quick connector inside the battery pack can be implemented. Leakage of quick connectors, if occurs, only happens outside the battery pack, thus avoiding leakage inside the battery pack and damage to the battery pack and improving the service life and safety of the battery pack. Secondly, since quick connectors are located at the bottom of the battery pack, when a quick connector fails due to leakage, the quick connector can be quickly replaced outside the battery pack without disassembling the entire battery pack. In this manner, after-sales costs are reduced.

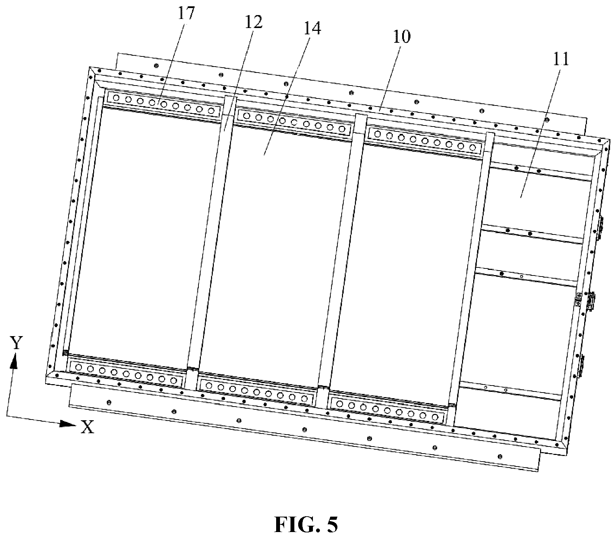

With reference to FIG. 1, one or more battery modules 20 may be provided. When multiple battery modules 20 are provided, the multiple battery modules 20 may be arranged in the X-axis direction. The X-axis direction is the length direction of the box 10. The Y-axis direction is the width direction of the box 10. As shown in FIG. 5, multiple beams 12 are also disposed in the box 10; each beam 12 is parallel to the Y-axis, and the multiple beams 12 are arranged at intervals in the X-axis direction. The beams 12 divide the space in the box 10 into multiple subspaces, and each subspace contains a battery module 20. When a battery module 20 in a certain subspace misfires due to high temperature, the beams 12 can separate the subspace where the battery module 20 misfires due to high temperature from battery modules 20 in other subspaces, thereby reducing losses.

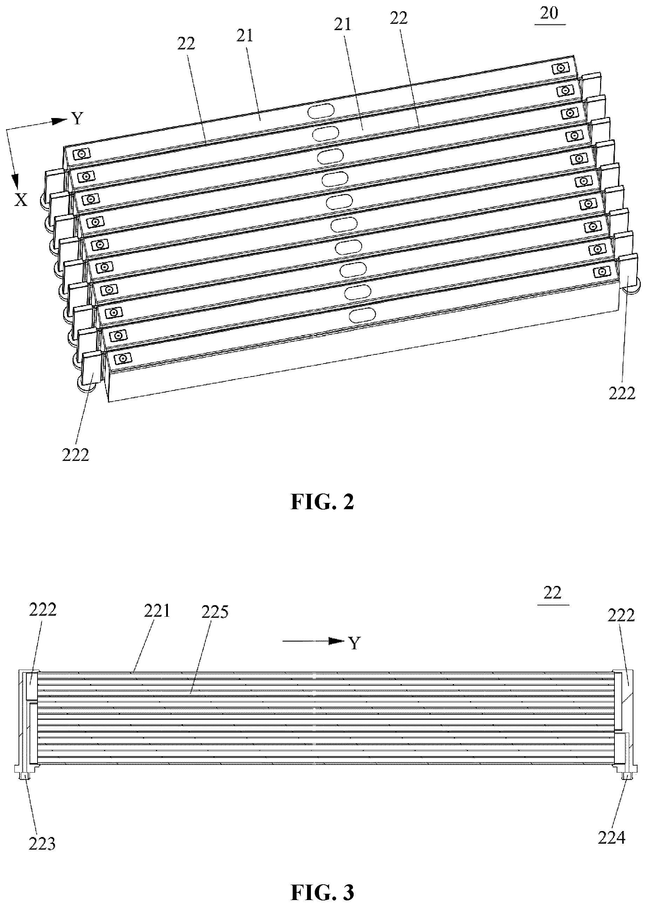

Specifically, with reference to FIG. 1 and FIG. 2, each battery module 20 includes multiple cells 21 and multiple liquid cooling plates 22. The cells 21 and the liquid cooling plates 22 are arranged alternately in the X-axis direction, that is, one liquid cooling plate 22 is arranged between any two adjacent cells 21, and two sides of a liquid cooling plate 22 are attached to the cells 21 on the adjacent two sides, respectively. In this manner, the cooling effect is improved, and the battery module 20 has better temperature uniformity. A liquid inlet nozzle 223 and a liquid outlet nozzle 224 are disposed on each liquid cooling plate 22. Correspondingly, multiple first quick connectors 31 are disposed on the liquid inlet pipe 30 and are in a one-to-one correspondence with liquid inlet nozzles 223, multiple second quick connectors 41 are disposed on the liquid outlet pipe 40 and are in a one-to-one correspondence with liquid outlet nozzles 224, and multiple through holes are disposed on the bottom guard plate 11 for the corresponding liquid inlet nozzles 223 and liquid outlet nozzles 224 to pass through.

In this embodiment, the cell 21 is square, and the liquid cooling plate 22 is configured as a flat plate structure. The liquid cooling plate 22 is bonded to a large surface of the cell 21 to increase the contact area between the liquid cooling plate 22 and each cell 21, thereby playing a good cooling effect on the cell 21 and improving the heat dissipation effect.

Preferably, a thermally conductive adhesive is disposed between the liquid cooling plate 22 and the large surface of the cell 21. On the one hand, the thermally conductive adhesive reduces the contact thermal resistance between the liquid cooling plate 22 and the cell 21. The heat conduction effect is better. On the other hand, the thermally conductive adhesive can bond the cell 21 and the corresponding liquid cooling plate 22 into a group. The structure is stable and reliable.

Specifically, as shown in FIG. 3, the liquid cooling plate 22 includes a body 221 and a collector 222, and the body 221 is provided with a flow channel 225 extending in the length direction and disposed inside the body 21. The collector 222 is connected to an end of the body 221, and the liquid inlet nozzle 223 and the liquid outlet nozzle 224 are disposed on the collector 222 and separately communicate with the flow channel 225. The coolant enters the flow channel 225 of the liquid cooling plate 22 through the liquid inlet nozzle 223 to cool the cell 21. Then the coolant transfers the heat by flowing along the flow channel 225 and is discharged through the liquid outlet nozzle 224 to complete the cooling of the cell 21. Preferably, the flow channel 225 includes multiple sub-flow channels arranged in parallel in the height direction of the flow channel 225 so that the cell 21 has better temperature uniformity.

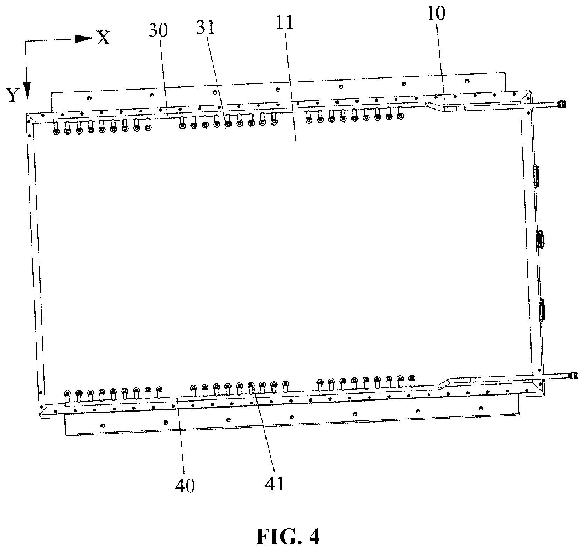

Preferably, as shown in FIG. 3, the liquid cooling plate 22 includes two collectors 222, two ends of the body 221 in the length direction (Y-axis direction) are a first end and a second end, respectively, the two collectors 222 are disposed at the first end and the second end, respectively, the liquid inlet nozzle 223 is disposed on the collector 222 at the first end, and the liquid outlet nozzle 224 is disposed on the collector 222 at the second end. That is, the liquid inlet nozzle 223 and the liquid outlet nozzle 224 are disposed at two ends of the liquid cooling plate 22 respectively in the Y-axis direction. All liquid inlet nozzles 223 in the battery module 20 are located at the first end, and all liquid outlet nozzles 224 are located at the second end. On the back of the bottom guard plate 11 of the box 10, as shown in FIG. 4, the liquid inlet pipe 30 and the liquid outlet pipe 40 are disposed on two sides of the bottom guard plate 11 in the Y-axis direction respectively; all first quick connectors 31 are disposed on the same side, and all second quick connectors 41 are disposed on the other side. This arrangement can optimize the layout of the liquid cooling pipe, avoid clutter caused by excessive concentration of pipelines, and facilitate users to manage and monitor the cooling pipelines.

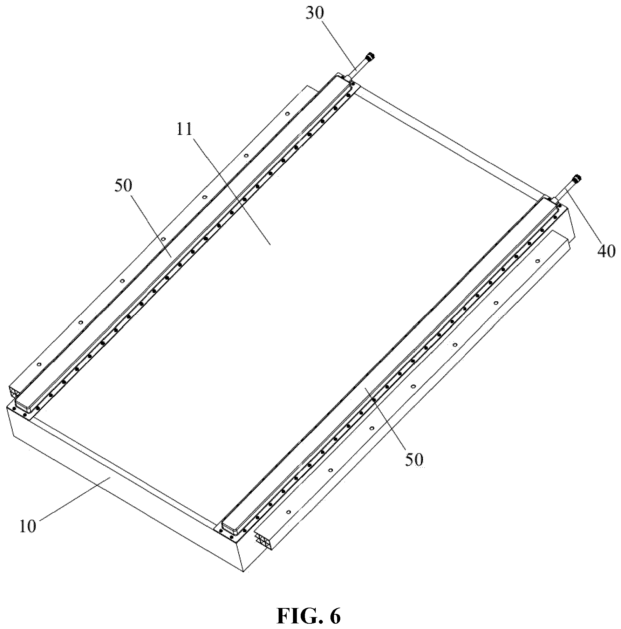

As shown in FIG. 6, a protective cover 50 is disposed on the bottom side of the bottom guard plate 11, and the protective cover 50 is disposed to cover the outside of the liquid inlet pipe 30 and the liquid outlet pipe 40 and is fixedly connected to the bottom of the box 10. Since the liquid inlet pipe 30 and the liquid outlet pipe 40 are arranged on the two sides, two protective covers 50 are provided. One protective layer 50 is disposed to cover the outside of the liquid inlet pipe 30, and the other is disposed to cover the outside of the liquid outlet pipe 40. With the configuration of the protective cover 50, the liquid inlet nozzle 223, the liquid outlet nozzle 224, the first quick connector 31, the second quick connector 41, and the corresponding pipelines that are outside the box 10 can be protected to prevent damage when subjected to external force impact. In addition, when a quick connector fails due to leakage, the quick connector can be replaced by removing the protective cover 50 at the bottom of the battery pack, without disassembling the battery pack. Thus, management and maintenance are facilitated.

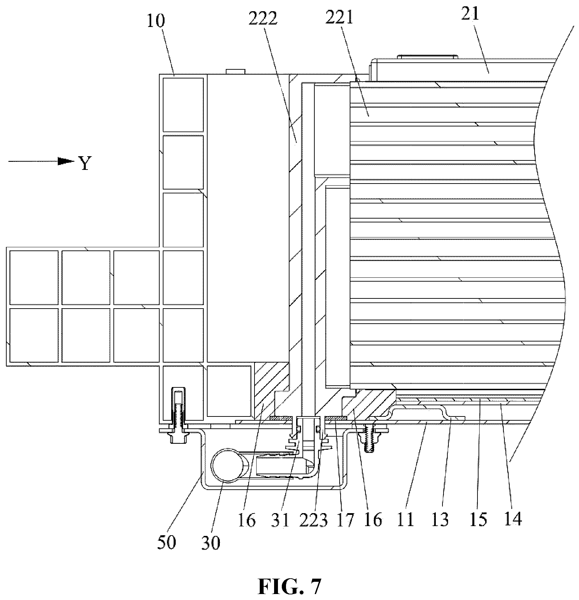

Further, as shown in FIG. 5 and FIG. 7, multiple brackets 13 are fixed to the inner side of the bottom guard plate 11, each bracket 13 extends in the X-axis direction, and the multiple brackets 13 are arranged at intervals in the Y-axis direction. A support plate 14 is disposed on the bracket 13 to support the cell 21. This arrangement can improve the structural strength of the bottom of the box 10, thereby stably supporting the battery module 20. A first structural adhesive 15 is disposed between the support plate 14 and the bottom of the cell 21 and used to bond and fix the bottom of the cell 21 to the support plate 14 to ensure a stable connection between the two.

As shown in FIG. 7, a second structural adhesive 16 is filled between each bottom at two sides of the box 10 in the width direction of the box 10 and a bottom at a respective side of the battery module 20. The second structural adhesive 16 is configured to adhere two sides of the battery module 20 respectively to the two inner sides of the box 10 to ensure a stable connection. In addition, the second structural adhesive 16 can provide sealing separately between the liquid inlet nozzle 223 and the bottom guard plate 11 and between the liquid outlet nozzle 224 and the bottom guard plate 11 to achieve waterproofing. It should be noted that FIG. 7 only shows the structure of one side of the box 10 and the battery module 20, and the structure of the other side is the same as the one side.

As shown in FIG. 5 and FIG. 7, foam 17 is attached to the inner side of the bottom guard plate 11, and hole positions on the foam 17 are arranged to correspond to the through holes on the bottom guard plate 11. After the liquid inlet nozzle 223 and the liquid outlet nozzle 224 penetrate through the corresponding through holes, the foam 17 on two sides is disposed around the liquid inlet nozzle 223 and the liquid outlet nozzle 224. By the configuration of the foam 17, it is possible to prevent the adhesive from leaking from the through holes of the bottom guard plate 11 when the second structural adhesive 16 is poured in.

The specific assembly process of the battery pack is as follows. First, the liquid cooling plate 22 and the cell 21 are bonded by the thermally conductive adhesive to form a battery module 20. Then, corresponding through holes are opened on the bottom guard plate 11 according to the positions of the liquid inlet nozzle 223 and the liquid outlet nozzle 224, and the foam 17 is attached to the bottom guard plate 11. After that, the first structural adhesive 15 is applied to the support plate 14, the battery module 20 is placed on the support plate 14, and the liquid inlet nozzle 223 and the liquid outlet nozzle 224 of the liquid cooling plate 22 pass downward through the through holes of the bottom guard plate 11 to penetrate through the bottom guard plate 11 to the outside of the box 10. Then, the second structural adhesive 16 is poured into the two inner sides of the box 10 to adhere the battery module 20 to the side of the box 10. After that, each first quick connector 31 on the liquid inlet pipe 30 is connected to a corresponding liquid inlet nozzle 223, and each second quick connector 41 on the liquid outlet pipe 40 is connected to a corresponding liquid outlet nozzle 224 to form a liquid cooling circuit. Finally, the protective cover 50 is fixed to the bottom surface of the bottom guard plate 11.

This embodiment also provides a powered device including the preceding battery pack. The battery pack can supply power for the powered device. The powered device may be an electric vehicle, a hybrid electric vehicle, a ship, or the like. In some embodiments, the powered device is an electric vehicle. The electric vehicle is a battery electric vehicle, a hybrid electric vehicle, or an extended-range vehicle. In other embodiments, the powered device may also be other devices, which are not specifically limited herein. The powered device provided in the embodiment has high safety performance with the configuration of the preceding battery pack.

Apparently, the preceding embodiments of the present invention are examples for clearly illustrating the present invention and are not intended to limit the implementations of the present invention. For those of ordinary skill in the art, changes or alterations in other different forms may also be made based on the preceding description. All implementations cannot be and do not need to be exhausted herein. Any modifications, equivalent substitutions, and improvements made within the scope of the claims fall within the scope of the the present invention.

## Claims

1. A battery pack, comprising:
a box (10), wherein a bottom guard plate (11) is disposed at a bottom of the box (10);
a cell (21) and a liquid cooling plate (22) attached to the cell (21), wherein the cell (21) and the liquid cooling plate (22) are both disposed in the box (10), and the liquid cooling plate (22) is provided with a liquid inlet nozzle (223) and a liquid outlet nozzle (224) that are penetrate through the bottom guard plate (11) to outside of the box (10); and
a liquid inlet pipe (30) and a liquid outlet pipe (40) that are disposed outside the box (10), wherein the liquid inlet pipe (30) is provided with a first quick connector (31), the liquid outlet pipe (40) is provided with a second quick connector (41), the first quick connector (31) is connected to the liquid inlet nozzle (223), and the second quick connector (41) is connected to the liquid outlet nozzle (224);
wherein the battery pack is **characterized in that** the liquid cooling plate (22) comprises:
a body (221), wherein a flow channel (225) extending in a length direction is disposed inside the body (221); and
a collector (222) connected to an end of the body (221), wherein the liquid inlet nozzle (223) and the liquid outlet nozzle (224) are disposed on the collector (222) and separately communicate with the flow channel (225).

2. The battery pack of claim 1, wherein the liquid cooling plate (22) comprises two collectors (222), two ends of the body (221) in the length direction are a first end and a second end, respectively, the two collectors (222) are disposed at the first end and the second end, respectively, the liquid inlet nozzle (223) is disposed on a collector (222) at the first end, and the liquid outlet nozzle (224) is disposed on a collector (222) at the second end.

3. The battery pack of claim 1 or 2, wherein the battery pack comprises a plurality of cells (21) and a plurality of liquid cooling plates (22), the plurality of cells (21) and the plurality of liquid cooling plates (22) are arranged alternately in a length direction of the body (10) to form a battery module (20), and a liquid cooling plate (22) of the plurality of liquid cooling plates (22) is bonded to a large surface of a respective cell (21) among the plurality of cells (21).

4. The battery pack of claim 3, wherein a thermally conductive adhesive is disposed between the liquid cooling plate (22) and the large surface of the respective cell (21).

5. The battery pack of claim 3, wherein a second structural adhesive (16) is filled between each bottom on two sides of the box (10) in a width direction of the box (10) and a bottom on a respective side of the battery module (20).

6. The battery pack of claim 1 or 2, wherein foam (17) is attached to an inner side of the bottom guard plate (11), and the foam (17) is disposed around the liquid inlet nozzle (223) and the liquid outlet nozzle (224).

7. The battery pack of claim 1 or 2, wherein a bracket (13) is fixed to an inner side of the bottom guard plate (11), a support plate (14) is disposed on the bracket (13) and configured to support the cell (21), and a first structural adhesive (15) is disposed between the support plate (14) and a bottom of the cell (21).

8. The battery pack of claim 1 or 2, wherein a protective cover (50) is disposed on a bottom side of the bottom guard plate (11), and the protective cover (50) is disposed to cover outside of the liquid inlet pipe (30) and the liquid outlet pipe (40).

9. A powered device, comprising the battery pack of any one of claims 1 to 8.

## Patentansprüche

1. Batteriepack, umfassend:
einen Kasten (10), wobei eine unterseitige Schutzplatte (11) an einer Unterseite des Kastens (10) angeordnet ist;
eine Zelle (21) und eine Flüssigkeitskühlungsplatte (22), die an der Zelle (21) angebracht ist, wobei die Zelle (21) und die Flüssigkeitskühlungsplatte (22) beide in dem Kasten (10) angeordnet sind und die Flüssigkeitskühlungsplatte (22) mit einer Flüssigkeitseinlassdüse (223) und einer Flüssigkeitsauslassdüse (224) versehen ist, die durch die unterseitige Schutzplatte (11) zur Außenseite des Kastens (10) dringen, und
ein Flüssigkeitseinlassrohr (30) sowie ein Flüssigkeitsauslassrohr (40), die außerhalb des Kastens (10) angeordnet sind, wobei das Flüssigkeitseinlassrohr (30) mit einer ersten Schnellkupplung (31) versehen ist, das Flüssigkeitsauslassrohr (40) mit einer zweiten Schnellkupplung (41) versehen ist, die erste Schnellkupplung (31) mit der Flüssigkeitseinlassdüse (223) verbunden ist und die zweite Schnellkupplung (41) mit der Flüssigkeitsauslassdüse (224) verbunden ist,
wobei das Batteriepack **dadurch gekennzeichnet ist, dass** die Flüssigkeitskühlungsplatte (22) Folgendes umfasst:
einen Körper (221), wobei sich ein Strömungskanal (225), der sich in einer Längsrichtung erstreckt, innerhalb des Körpers (221) angeordnet ist, und
einen Sammelverteiler (222), der mit einem Ende des Körpers (221) verbunden ist, wobei die Flüssigkeitseinlassdüse (223) und die Flüssigkeitsauslassdüse (224) auf dem Sammelverteiler (222) angeordnet sind und separat mit dem Strömungskanal (225) kommunizieren.

2. Batteriepack nach Anspruch 1, wobei die Flüssigkeitskühlungsplatte (22) zwei Sammelverteiler (222) umfasst, zwei Enden des Körpers (221) in der Längsrichtung jeweils ein erstes Ende und ein zweites Ende sind, die beiden Sammelverteiler (222) jeweils an dem ersten Ende und dem zweiten Ende angeordnet sind, die Flüssigkeitseinlassdüse (223) auf einem Sammelverteiler (222) an dem ersten Ende angeordnet ist und die Flüssigkeitsauslassdüse (224) auf einem Sammelverteiler (222) an dem zweiten Ende angeordnet ist.

3. Batteriepack nach Anspruch 1 oder 2, wobei das Batteriepack eine Vielzahl von Zellen (21) und eine Vielzahl von Flüssigkeitskühlungsplatten (22) umfasst, wobei die Vielzahl von Zellen (21) und die Vielzahl von Flüssigkeitskühlungsplatten (22) abwechselnd in einer Längsrichtung des Körpers (10) angeordnet sind, um ein Batteriemodul (20) zu bilden, und eine Flüssigkeitskühlungsplatte (22) der Vielzahl von Flüssigkeitskühlungsplatten (22) an einer großen Oberfläche einer jeweiligen Zelle (21) unter der Vielzahl von Zellen (21) befestigt ist.

4. Batteriepack nach Anspruch 3, wobei ein thermisch leitfähiger Klebstoff zwischen der Flüssigkeitskühlungsplatte (22) und der großen Oberfläche der jeweiligen Zelle (21) angeordnet ist.

5. Batteriepack nach Anspruch 3, wobei ein zweiter struktureller Klebstoff (16) zwischen jeder Unterseite an zwei Seiten des Kastens (10) in einer Breitenrichtung des Kastens (10) und einer Unterseite an einer jeweiligen Seite des Batteriemoduls (20) eingefüllt ist.

6. Batteriepack nach Anspruch 1 oder 2, wobei Schaum (17) an einer Innenseite der unterseitigen Schutzplatte (11) angebracht ist und der Schaum (17) um die Flüssigkeitseinlassdüse (223) und die Flüssigkeitsauslassdüse (224) herum angeordnet ist.

7. Batteriepack nach Anspruch 1 oder 2, wobei eine Halterung (13) an einer Innenseite der unterseitigen Schutzplatte (11) fixiert ist, eine Stützplatte (14) auf der Halterung (13) angeordnet und ausgelegt ist, um die Zelle (21) zu stützen, und ein erster struktureller Klebstoff (15) zwischen der Stützplatte (14) und einer Unterseite der Zelle (21) angeordnet ist.

8. Batteriepack nach Anspruch 1 oder 2, wobei eine Schutzabdeckung (50) auf einer unterseitigen Seite der unterseitigen Schutzplatte (11) angeordnet ist und die Schutzabdeckung (50) angeordnet ist, um die Außenseite des Flüssigkeitseinlassrohrs (30) und des Flüssigkeitsauslassrohrs (40) zu bedecken.

9. Mit Energie betriebene Vorrichtung, umfassend das Batteriepack nach einem der Ansprüche 1 bis 8.

## Revendications

1. Bloc-batterie, comprenant :
un boîtier (10), dans lequel une plaque de garde inférieure (11) est disposée au fond du boîtier (10) ;
une cellule (21) et une plaque de refroidissement de liquide (22) fixée à la cellule (21), dans lequel la cellule (21) et la plaque de refroidissement de liquide (22) sont toutes les deux disposées dans le boîtier (10), et la plaque de refroidissement de liquide (22) est pourvue d'une buse d'entrée de liquide (223) et d'une buse de sortie de liquide (224) qui pénètrent à travers la plaque de garde inférieure (11) vers l'extérieur du boîtier (10) ; et
une conduite d'entrée de liquide (30) et une conduite de sortie de liquide (40) qui sont disposées à l'extérieur du boîtier (10), dans lequel la conduite d'entrée de liquide (30) est pourvue d'un premier raccord rapide (31), la conduite de sortie de liquide (40) est pourvue d'un deuxième raccord rapide (41), le premier raccord rapide (31) est raccordé à la buse d'entrée de liquide (223), et le deuxième raccord rapide (41) est raccordé à la buse de sortie de liquide (224) ;
dans lequel le bloc-batterie est **caractérisé en ce que** la plaque de refroidissement de liquide (22) comprend :
un corps (221), dans lequel un canal d'écoulement (225) s'étendant dans une direction de la longueur est disposé à l'intérieur du corps (221) ; et
un collecteur (222) raccordé à une extrémité du corps (221), dans lequel la buse d'entrée de liquide (223) et la buse de sortie de liquide (224) sont disposées sur le collecteur (222) et communiquent séparément avec le canal d'écoulement (225).

2. Bloc-batterie selon la revendication 1, dans lequel la plaque de refroidissement de liquide (22) comprend deux collecteurs (222), deux extrémités du corps (221) dans la direction de la longueur sont une première extrémité et une deuxième extrémité, respectivement, les deux collecteurs (222) sont disposés au niveau de la première extrémité et de la deuxième extrémité, respectivement, la buse d'entrée de liquide (223) est disposée sur un collecteur (222) au niveau de la première extrémité, et la buse de sortie de liquide (224) est disposée sur un collecteur (222) au niveau de la deuxième extrémité.

3. Bloc-batterie selon la revendication 1 ou 2, dans lequel le bloc-batterie comprend une pluralité de cellules (21) et une pluralité de plaques de refroidissement de liquide (22), la pluralité de cellules (21) et la pluralité de plaques de refroidissement de liquide (22) est agencée de manière alternée dans une direction de la longueur du corps (10) pour former un module de batterie (20), et une plaque de refroidissement de liquide (22) de la pluralité de plaques de refroidissement de liquide (22) est liée à une surface large d'une cellule respective (21) parmi la pluralité de cellules (21).

4. Bloc-batterie selon la revendication 3, dans lequel un adhésif thermo-conducteur est disposé entre la plaque de refroidissement de liquide (22) et la surface large de la cellule respective (21).

5. Bloc-batterie selon la revendication 3, dans lequel un deuxième adhésif structurel (16) est rempli entre chaque fond sur deux côtés du boîtier (10) dans une direction de la largeur du boîtier (10) et un fond sur un côté respectif du module de batterie (20).

6. Bloc-batterie selon la revendication 1 ou 2, dans lequel la mousse (17) est fixée à un côté interne de la plaque de garde inférieure (11), et la mousse (17) est disposée autour de la buse d'entrée de liquide (223) et de la buse de sortie de liquide (224).

7. Bloc-batterie selon la revendication 1 ou 2, dans lequel un support (13) est fixé à un côté interne de la plaque de garde inférieure (11), une plaque de support (14) est disposée sur le support (13) et configurée pour soutenir la cellule (21), et un premier adhésif structurel (15) est disposé entre la plaque de support (14) et un fond de la cellule (21).

8. Bloc-batterie selon la revendication 1 ou 2, dans lequel un couvercle protecteur (50) est disposé sur un côté inférieur de la plaque de garde inférieure (11), et le couvercle protecteur (50) est disposé pour recouvrir l'extérieur de la conduite d'entrée de liquide (30) et de la conduite de sortie de liquide (40).

9. Dispositif alimenté, comprenant le bloc-batterie selon l'une quelconque des revendications 1 à 8.
